# EUROPEAN PATENT SPECIFICATION

(11) **EP 4 667 862 B1**
(45) Date of publication and mention of the grant of the patent: **13.05.2026**
(21) Application number: 24216478.8
(22) Date of filing: 29.11.2024
(51) Int. Cl.: F28F 3/12, F28F 3/04, F28F 21/08

(54) **HEAT EXCHANGE PLATE AND BATTERY DEVICE**
WÄRMETAUSCHERPLATTE UND BATTERIEVORRICHTUNG
PLAQUE D'ÉCHANGE DE CHALEUR ET DISPOSITIF DE BATTERIE

(30) Priority: 19.06.2024 CN 202421416066 U
(43) Date of publication of application: 24.12.2025
(73) Proprietor: CALB Group Co., Ltd., Changzhou City, Jiangsu Province (CN)
(72) Inventor: WANG, Qiong, Wuhan City, Hubei Province (CN); CHEN, Jianxin, Changzhou City, Jiangsu Province (CN)
(74) Representative: Becker, Eberhard

(56) References cited:
- WO-A1-2023/247745
- CN-B- 111 086 289
- CN-U- 219 371 198
- DE-A1- 102020 206 853
- US-B2- 10 910 683
- US-B2- 6 582 835

## Description

### BACKGROUND

### Technical Field

In the present application, the terms "utility model", "disclosure" and "invention" are used interchangeably and refer to the same subject-matter. The present utility model relates to the technical field of batteries, and more particularly relates to a heat exchange plate and a battery device.

### Description of Related Art

In the related art, a battery device is generally provided with a heat exchange plate which is used for exchanging heat with a battery. In the related art, the heat exchange plate is generally formed by brazing an aluminum alloy stamped plate, and restricted by a brazing filler, a 3-series aluminum sheet is generally adopted as the heat exchange plate. The heat exchange plate adopting the 3-series aluminum sheet is relatively weak in strength, so that deformation and damage of the heat exchange plate are likely to be caused. Especially when the heat exchange plate needs to support the battery, it is difficult to obtain a satisfactory result for vibration and impact modes of a whole package of the battery device.

It should be noted that the information disclosed in the above background art section is only used for enhancing an understanding of the background of the present disclosure and thus may include information which does not constitute the prior art known to those ordinarily skilled in the art.

CN 219 371 198 U, for instance discloses a heat exchange plate according to the preamble of claim 1.

### SUMMARY

The present utility model provides a heat exchange plate which can ameliorate the technical problem of weak strength thereof.

According to an aspect of the present disclosure, the heat exchange plate includes:
a first side plate being of an aluminum structure or an aluminum alloy structure;
a second side plate, a large face of the second side plate being arranged opposite to a large face of the first side plate, and a groove for forming a heat exchange channel being formed in one side of the second side plate facing the first side plate;
wherein the second side plate includes a main body layer and a protective layer, the protective layer is located between the main body layer and the first side plate, the main body layer is of a steel structure, and the protective layer is of an aluminum structure or an aluminum alloy structure;
a thickness of the second side plate located in an area outside the groove is g mm, a depth of the groove is d mm, and a thickness of the protective layer located in the area outside the groove is x mm, x×0.01×(1-(4.55d-5.36)) > λ×g; and
wherein λ is equal to 10%.

On the one hand, in the present utility model, the main body layer in the second side plate is arranged to be of the steel structure, and the steel structure has relatively high strength, so that the arrangement may improve the overall strength of the heat exchange plate; on the other hand, in the present utility model, the protective layer is arranged on one side of the second side plate facing the first side plate, so that the protective layer may not only prevent the main body layer from being corroded by a heat conductive medium between the first side plate and the second side plate, and meanwhile the aluminum-containing protective layer may also improve the welding strength of the first side plate and the second side plate; on another hand, in the present utility model, the thickness of the protective layer is set according to the formula x×0.01×(1-(4.55d-5.36)) > λ×g, since the protective layer will be thinned at a bending position on the side face of the groove, and the depth of the groove will affect a thinning rate of the protective layer at the bending position on the side face of the groove, in the present utility model, the thickness of the protective layer is set according to the depth of the groove and the coefficient λ, so as to ensure that the thickness of the protective layer located at the bending position on the side face of the groove is greater than a corrosion depth of the heat exchange medium, wherein x×0.01×(1-(4.55d-5.36)) represents the thickness of the protective layer located at the bending position on the side face of the groove, and λ×g represents the corrosion depth of the heat exchange medium; and on yet another hand, the steel structure has a relatively low heat conduction speed, and the heat exchange plate may have the function of directional heat dissipation, that is, the heat exchange plate may reduce the amount of heat dissipation from the battery through the second side plate.

According to an aspect of the present disclosure, the present utility model further provides a battery device which includes the above heat exchange plate.

It should be understood that the foregoing general description and the following detailed description are exemplary and explanatory only and cannot limit the present disclosure.

### BRIEF DESCRIPTION OF THE DRAWINGS

For a better understanding of the present disclosure, reference may be made to the examples illustrated in the following accompanying drawings. The components in the accompanying drawings are not necessarily to scale, and related elements may be omitted to emphasize and clearly illustrate the technical features of the present disclosure. In addition, the related elements or components may have different arrangements as known in the art. Further, in the accompanying drawings, like reference numerals designate identical or similar components throughout the several drawings. In the drawings:
FIG. 1 is a schematic structural diagram of an exemplary example of a heat exchange plate according to the present disclosure;
FIG. 2 is an exploded diagram of the heat exchange plate shown in FIG. 1;
FIG. 3 is a partial cross-sectional diagram of the heat exchange plate shown in FIG. 1 taken along a dashed line AA;
FIG. 4 is a partial cross-sectional diagram of a second side plate in the heat exchange plate shown in FIG. 1 taken along the dashed line AA;
FIG. 5 is a partial cross-sectional diagram of the heat exchange plate shown in FIG. 3 taken along a dashed line BB;
FIG. 6 is a schematic structural diagram of an exemplary example of a battery device according to the present disclosure; and
FIG. 7 is a schematic structural diagram of another exemplary example of the battery device according to the present disclosure.

### Description of reference numerals:

1. first side plate; 2. second side plate; 21. main body layer; 22. protective layer; 3. groove; 311. circular arc area; 32. bottom face; 4. welding layer; 5. battery; 6. battery box; and 7. heat exchange channel.

### DESCRIPTION OF THE EMBODIMENTS

The technical solutions in exemplary examples of the present disclosure will be described clearly and completely below in conjunction with accompanying drawings in the exemplary examples of the present disclosure. The exemplary examples described herein are merely for illustrative purposes and are not intended to limit the scope of protection of the present disclosure. Therefore, it should be understood that various modifications and changes may be made to the exemplary examples without departing from the scope of protection of the present disclosure.

In the description of the present disclosure, unless expressly stipulated and defined otherwise, the terms "first" and "second" are merely used for descriptive purposes and are not to be construed as indicating or implying relative importance; the term "a plurality of" refers to two or more; and the term "and/or" includes any combination and all combinations of one or more associated listed items. Especially, reference to "the/said" object or "one" object is similarly intended to indicate one of a plurality of such objects which are possible.

Unless otherwise stipulated or illustrated, the terms such as "connection" and "fixing" should be understood in a broad sense, for example, the "connection" may be fixed connection, detachable connection, integral connection, electric connection or signal connection; and the "connection" may be direct connection, or may also be indirect connection through an intermediate medium. For those skilled in the art, the specific meaning of the above terms in the present disclosure may be understood according to specific conditions.

Further, in the description of the present disclosure, it is to be understood that the orientations such as "up", "down", "inside" and "outside" described in the exemplary examples of the present disclosure are described from the perspective shown in the accompanying drawings, and should not be construed as defining the exemplary examples of the present disclosure. It is also to be understood that in context, when referring to one element or feature being connected "above", "below", "inside" or "outside" other elements (one or more), the element or feature may be not only directly connected "above", "below", "inside" or "outside" the other (one or more) elements, and may also be indirectly connected "above", "below", "inside" or "outside" the other (one or more) elements through an intermediate element.

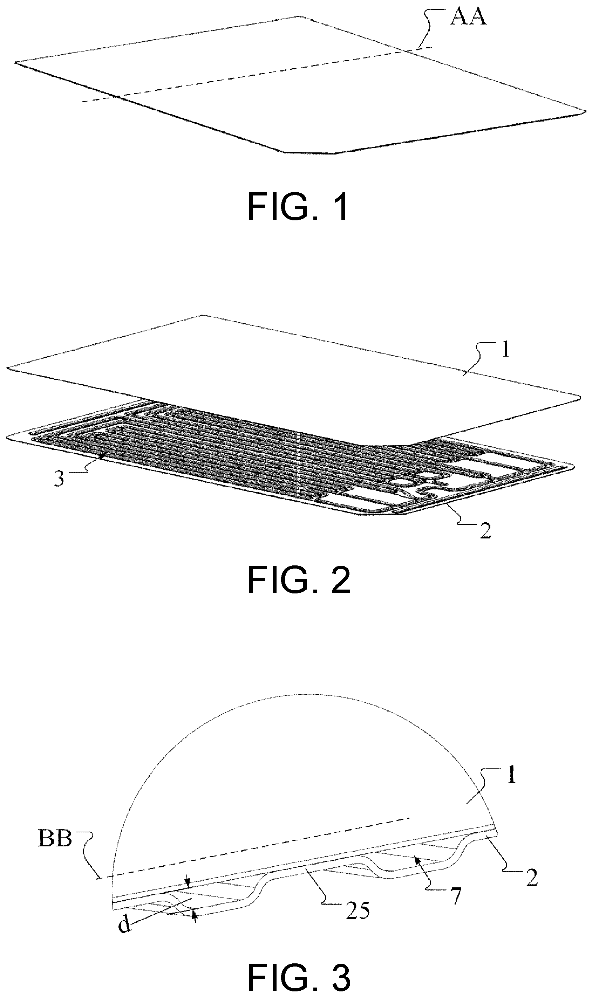

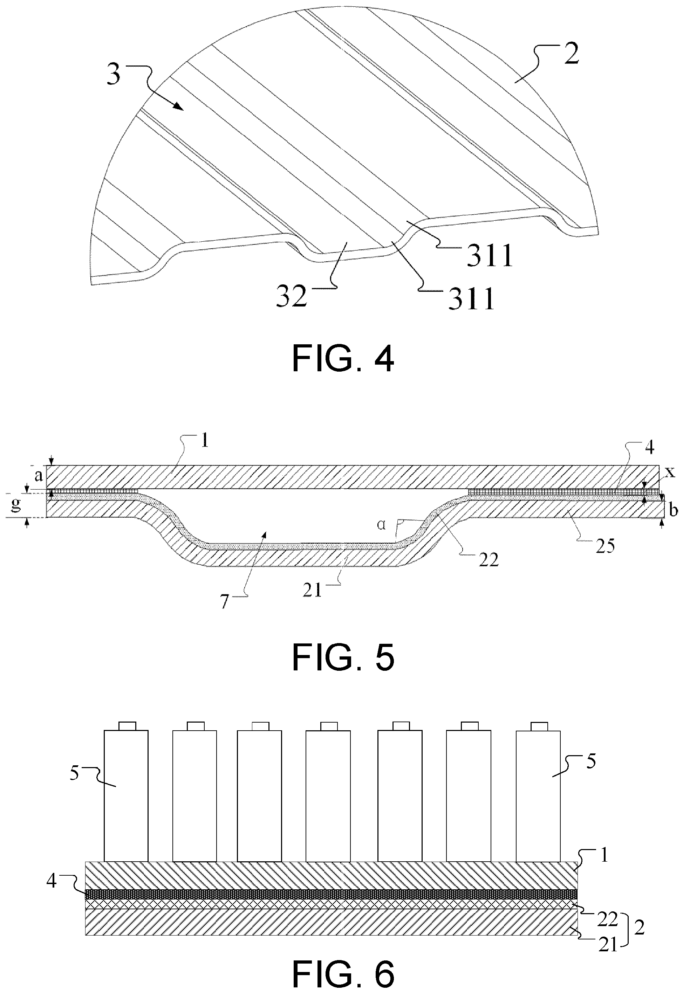

As shown in FIG. 1 to FIG. 5, FIG. 1 is a schematic structural diagram of an exemplary example of a heat exchange plate according to the present disclosure, FIG. 2 is an exploded diagram of the heat exchange plate shown in FIG. 1, FIG. 3 is a partial cross-sectional diagram of the heat exchange plate shown in FIG. 1 taken along a dashed line AA, FIG. 4 is a partial cross-sectional diagram of a second side plate in the heat exchange plate shown in FIG. 1 taken along the dashed line AA, and FIG. 5 is a partial cross-sectional diagram of the heat exchange plate shown in FIG. 3 taken along a dashed line BB.

The heat exchange plate includes: a first side plate 1 and a second side plate 2, wherein the first side plate 1 is of an aluminum structure or an aluminum alloy structure; a large face of the second side plate 2 is arranged opposite to a large face of the first side plate 1, and a groove 3 for forming a heat exchange channel 7 is formed in one side of the second side plate 2 facing the first side plate 1; wherein the second side plate 2 includes a main body layer 21 and a protective layer 22, the protective layer 22 is located between the main body layer 21 and the first side plate 1, the main body layer 21 is of a steel structure, and the protective layer 22 is of an aluminum structure or an aluminum alloy structure; a thickness of the second side plate 2 located in an area outside the groove 3 is g mm, a depth of the groove 3 is d mm, and a thickness of the protective layer 22 located in the area outside the groove is x mm, x×0.01×(1-(4.55d-5.36)) > λ×g; wherein λ is equal to 10%.

On the one hand, in this exemplary example, the main body layer in the second side plate is arranged to be of the steel structure, and the steel structure has relatively high strength, so that the arrangement may improve the overall strength of the heat exchange plate; on the other hand, in this exemplary example, the protective layer is arranged on one side of the second side plate facing the first side plate, and the protective layer has corrosion resistance, so that the protective layer may not only prevent the main body layer from being corroded by a heat conductive medium between the first side plate and the second side plate, and meanwhile the aluminum-containing protective layer may also improve the welding strength of the first side plate and the second side plate; on another hand, in this exemplary example, the thickness of the protective layer is set according to the formula x×0.01×(1-(4.55d-5.36)) > λ×g, since the protective layer will be thinned at a bending position on a wall face of the groove, and the depth of the groove will affect a thinning rate of the protective layer at the bending position on the wall face of the groove, in this exemplary example, the thickness of the protective layer is set according to the depth of the groove and the coefficient λ, so as to ensure that the thickness of the protective layer located at the bending position on the wall face of the groove is greater than a corrosion depth of the heat exchange medium, wherein x×0.01×(1-(4.55d-5.36)) represents the thickness of the protective layer located at the bending position on the wall face of the groove, and λ×g represents the corrosion depth of the heat exchange medium; on yet another hand, the steel structure has a relatively low heat conduction speed, and the heat exchange plate may have the function of directional heat dissipation, that is, the heat exchange plate may reduce the amount of heat dissipation from the battery through the second side plate; and on yet another hand, in this exemplary example, the protective layer is arranged to be of the aluminum structure or the aluminum alloy structure, the aluminum-containing protective layer facilitates welding with the first side plate, and meanwhile the aluminum-containing protective layer has a relatively high elongation, so that the thinning rate of the protective layer at the bending position is relatively low.

In this exemplary example, x×0.01×(1-(4.55d-5.36))<g-0.45, when a design thickness of the protective layer is less than g-0.45, on the one hand, the strength of the heat exchange plate may be ensured without relatively large deformation due to a ball strike test, thereby ensuring the circulation of the heat exchange medium, and on the other hand, the energy density of the overall battery package may be prevented from being affected by the increased weight of the heat exchange plate due to the excessive thickness of the second side plate, and the problem that a heat dissipation rate decreases due to the excessive thickness of the second side plate may be prevented.

It should be noted that the heat exchange channel in the heat exchange plate may be used for accommodating the heat conductive medium which may be a gas or liquid, and the heat conductive medium circularly flows in the heat exchange channel, so as to exchange heat with the battery. In addition, the heat conductive medium may also be a solid. In this exemplary example, the heat exchange plate may either cool or heat the battery. For example, when a temperature of the battery is relatively high, the heat exchange plate may cool the battery to improve the safety and stability of the battery package; and the normal use of the battery is affected due to a too low temperature in an extremely cold environment, the heat exchange plate may heat the battery, so that the battery package may be adapted to more use environments.

In this exemplary example, as shown in FIG. 1 to FIG. 5, x/g is 0.1 to 1.72, for example, x/g may be equal to 0.1, 0.2, 0.3, 0.4, 0.5, 0.6, 0.7, 0.8, 0.9, 1, 1.1, 1.2, 1.3, 1.4, 1.5, 1.6, 1.7, 1.72, and the like. In this exemplary example, the protective layer 22 and the main body layer 21 may be firstly compounded to form a composite layer, and then the composite layer may be subjected to processes such as stamping to form the groove in the composite layer. In this exemplary example, x/g is set to be a suitable size, so as to facilitate the compounding of the protective layer 22 and the main body layer 21 and subsequent processes such as stamping.

In this exemplary example, the protective layer 22 and the main body layer 21 may be compounded by a hot rolling or cold rolling process to form the second side plate 2.

In this exemplary example, as shown in FIG. 1 to FIG. 5, x may be 0.125 to 1.2, for example, x may be equal to 0.125, 0.2, 0.3, 0.4, 0.5, 0.6, 0.7, 0.8, 0.9, 1, 1.1, 1.2, and the like. In this exemplary example, x is set to be a suitable size, so that the setting may prevent the heat exchange plate from being too heavy, and meanwhile may also prevent the main body layer 21 from being corroded.

In this exemplary example, as shown in FIG. 1 to FIG. 5, a side face of the groove 3 includes a circular arc area 311, the second side plate 2 includes a straight portion 25 located outside the groove 3, a central axis of the circular arc area 311 is parallel to the straight portion 25, and a central angle α of the circular arc area 311 is 105° to 120°, for example, the central angle of the circular arc area 311 may be equal to 105°, 106°, 107°, 108°, 109°, 110°, 111°, 112°, 113°, 114°, 115°, 116°, 117°, 118°, 119°, 120°, and the like. If the central angle of the circular arc area 311 is too large, and an inclination degree of the side face of the groove relative to the bottom face 32 of the groove is relatively gentle, in order to achieve the same depth of the groove, the groove 3 needs to have a larger opening size, so that the groove 3 will occupy a larger space; and if the central angle of the circular arc area 311 is too small, the requirement for synchronous expansion of the main body layer 21 and the protective layer 22 is too high. In this exemplary example, the central angle of the circular arc area 311 is set to have a suitable size, and the arrangement may not only facilitate the stamping and molding of the second side plate and may also prevent the groove 3 from occupying an excessive space of the second side plate 2. The central axis of the circular arc area 311 is a straight line which passes through the center of the circular arc area 311 and is parallel to the circular arc area 311.

In this exemplary example, as shown in FIG. 1 to FIG. 5, a radius of curvature of the circular arc area 311 is greater than or equal to 2 mm. For example, the radius of curvature of the circular arc area 311 may be equal to 2 mm, 2.2 mm, 2.4 mm, 2.6 mm, 2.8 mm, 3 mm, 3.2 mm, 3.4 mm, 3.6 mm, 3.8 mm, 4 mm, and the like. If the radius of curvature of the circular arc area 311 is too small, the requirement for synchronous expansion of the main body layer 21 and the protective layer 22 is too high, in this exemplary example, the radius of curvature of the circular arc area 311 is set to be relatively large, thereby facilitating the synchronous stamping and molding of the main body layer 21 and the protective layer 22.

As shown in FIG. 1 to FIG. 5, the side face of the groove 3 includes two circular arc areas 311, one circular arc area 311 is connected to the bottom face 32 of the groove, and the other circular arc area 311 is connected to a straight side face of the second side plate which is located outside the groove and faces one side of the first side plate. The two circular arc areas 311 may be directly connected, or the two circular arc areas 311 may be connected by a plane area.

In this exemplary example, as shown in FIG. 1 to FIG. 5, d/g is 1.6 to 6.7, and d/g may be equal to 1.6, 1.8, 2, 2.2, 2.4, 2.6, 2.8, 3, 3.2, 3.4, 3.6, 3.8, 4, 4.2, 4.4, 4.6, 4.8, 5, 5.2, 5.4, 5.6, 5.8, 6, 6.2, 6.4, 6.6, 6.7, and the like. If d/g is too large, the amount of a material used for the second side plate 2 will increase, and the cost will increase; and if d/g is too small, the on-way resistance of the heat exchange channel 7 will increase, thereby affecting the flow resistance performance of the entire heat exchange plate. In this exemplary example, d/g is set to be a suitable size, and the arrangement may reduce the amount of the material used for the second side plate 2 and meanwhile may also ensure the flow resistance performance of the heat exchange plate.

In this exemplary example, as shown in FIG. 1 to FIG. 5, g may be 0.7 to 1.2, for example, g may be equal to 0.7, 0.8, 0.9, 1, 1.1, 1.2, and the like. If g is too large, the overall weight of the heat exchange plate is greater; and if g is too small, the strength of the second side plate is relatively weak, and especially when the second side plate is located at the bottom of the battery box, the second side plate is likely to be damaged. In this exemplary example, g is set to be a suitable size, and the setting may not only ensure the strength of the heat exchange plate and meanwhile may avoid the excessive weight of the heat exchange plate.

In this exemplary example, as shown in FIG. 1 to FIG. 5, the first side plate 1 and the second side plate 2 may be welded by a brazing process. Accordingly, the heat exchange plate may further include: a welding layer 4 welded between the first side plate 1 and the second side plate 2, wherein a melting point of the welding layer 4 is lower than a melting point of the protective layer 22, and/or the melting point of the welding layer 4 is lower than a melting point of the first side plate 1. In this exemplary example, the first side plate 1 and the second side plate 2 are welded by brazing filler metal having a lower melting point, so that the arrangement may not only improve the welding efficiency of the first side plate 1 and the second side plate 2, and meanwhile may also prevent the protective layer 22 from being penetrated by welding.

In this exemplary example, as shown in FIG. 1 to FIG. 5, a material of the welding layer 4 may be 4-series aluminum. The 4-series aluminum has a lower melting point.

In this exemplary example, as shown in FIG. 1 to FIG. 5, a material of the protective layer 22 may be 1-series aluminum; and/or, a material of the first side plate 1 is 3-series aluminum. The 1-series aluminum has relatively high corrosion resistance, and the protective layer 22 of the 1-series aluminum and the first side plate 1 of the 3-series aluminum are easy to weld.

It should be understood that in other exemplary examples, the welding layer 4, the protective layer 22 and the first side plate 1 may also be of other series of aluminum structures or aluminum alloy structures.

In this exemplary example, the aluminum alloy material may be an aluminum-containing material such as an aluminum-magnesium alloy and an aluminum-manganese alloy. Steel is a generic term for iron-carbon alloys containing 0.02% to 2.11% of carbon in percentage by mass. The chemical compositions of the steel may vary greatly, and the steel contains a small amount of elements such as manganese, phosphorus, silicon and sulphur. In practical production, the steel often contains different alloy elements according to different uses, such as manganese, nickel and vanadium.

In this exemplary example, as shown in FIG. 1 to FIG. 5, the first side plate 1 may be of a flat plate structure, a thickness of the first side plate 1 is a mm, a thickness of the main body layer 21 located in the area outside the groove 3 is b mm, and a/b is 0.1 to 9, for example, a/b may be equal to 0.1, 0.2, 0.3, 0.4, 0.5, 0.6, 0.7, 0.8, 0.9, 1, 2, 3, 4, 5, 6, 7, 8, 9, and the like. If a/b is too large, the thickness of the main body layer 21 is too small, and the strength of the heat exchange plate is relatively low; and if a/b is too small, the thickness of the first side plate 1 is too small, and the strength of the first side plate 1 is relatively weak, so that the first side plate is likely to be damaged during pressure relief of the battery. In this exemplary example, a/b is set to be a suitable size, and the setting may ensure the overall strength of the heat exchange plate.

The area of the second side plate 2 located outside the groove 3 is the area parallel to the first side plate.

In this exemplary example, the first side plate 1 may be further provided with structures such as an insulating anticorrosive layer.

This exemplary example further provides a battery device which may include the above heat exchange plate.

As shown in FIG. 6, FIG. 6 is a schematic structural diagram of an exemplary example of the battery device according to the present disclosure. The battery device further includes a battery 5 located on one side of the first side plate 1 away from the second side plate 2.

In this exemplary example, the thickness of the first side plate 1 is 1 mm to 3 mm, for example, the thickness of the first side plate 1 may be equal to 1 mm, 2 mm, 3 mm, and the like.

In this exemplary example, since the second side plate 2 has relatively high strength, accordingly, the battery device may not be provided with a bottom protective plate located at the bottom of the battery box. It should be understood that in other exemplary examples, in order to further improve the overall strength of the battery device, the battery device may also be provided with the bottom protective plate.

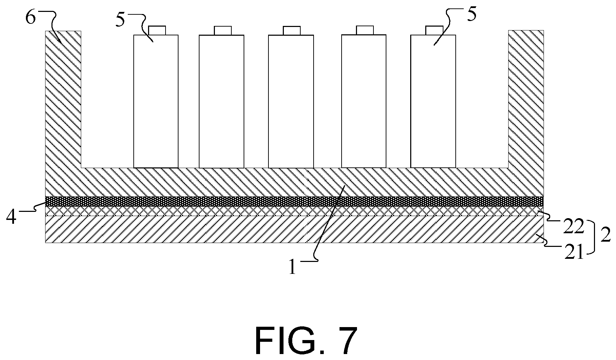

As shown in FIG. 7, FIG. 7 is a schematic structural diagram of another exemplary example of the battery device according to the present disclosure. The battery device includes a battery box 6, wherein the battery box 6 includes a bottom plate, and the bottom plate of the battery box 6 may be reused as the first side plate 1.

It should be noted that the battery includes a cell and an electrolyte, and the battery is the smallest unit capable of undergoing an electrochemical reaction such as charging/discharging. The cell refers to a unit formed by winding or laminating a stacking portion, and the stacking portion includes a first pole piece, a separation material and a second pole piece. When the first pole piece is a positive plate, the second pole piece is a negative plate, wherein the polarities of the first pole piece and the second pole piece are interchangeable. The first pole piece and the second pole piece are coated with active substances.

In this exemplary embodiment, the battery may be a lithium ion battery, and it should be understood that in other exemplary examples, the battery may also be a cadmium nickel battery, a nickel metal hydride battery, a lithium polymer battery, a sodium ion battery, a solid state battery, and the like.

In this exemplary example, the battery may be a square battery, that is, the battery may be a quadrangular battery. The quadrangular battery mainly refers to a battery being quadrangular in shape, but does not strictly define whether each side of the prism is a straight line in a strict sense, and corners between the sides are not necessarily right angles and may be circular arc transitions.

In other exemplary examples, the battery may be a cylindrical battery, and a battery housing of the cylindrical battery may include two circular end faces and a curved face located between the two circular end faces.

The battery may be a winding battery, that is, the first pole piece, the second pole piece charged oppositely to the first pole piece, and a separator piece arranged between the first pole piece and the second pole piece are wound to obtain a winding cell.

In this exemplary example, the battery device is a battery module or a battery package.

The battery module includes a plurality of batteries which may be square batteries, and the battery module may further include an end plate and a side plate which are used for fixing the plurality of batteries. The battery may be the cylindrical battery, and the cylindrical battery may be arranged on a supporting plate, thereby forming the battery module.

The battery package includes a plurality of batteries and a box, and the box is used for fixing the plurality of batteries.

It should be noted that the battery package includes batteries, there may be a plurality of batteries, and the plurality of batteries are arranged in the box, wherein the plurality of batteries may form the battery module and then be mounted in the box. Or, the plurality of batteries may be directly arranged in the box, that is, the plurality of batteries do not need to be grouped, and the plurality of batteries are fixed by utilizing the box.

It should be noted that the battery device provided in the present utility model may be used in various electric devices, such as mobile phones, portable devices, notebook computers, various vehicles (for example, electromobiles, electric cars, and the like), ships, spacecrafts, electric toys, and electric tools. Further, the spacecrafts described above may include, for example, airplanes, rockets, space shuttles, spaceships, and the like. The electric toys described above may include, for example, stationary or mobile electric toys (for example, gaming machines, electric car toys, electric boat toys, electric aircraft toys, and the like). The electric tools described above may include, for example, metal cutting electric tools, grinding electric tools, assembling electric tools, and railway electric tools, and specifically may be, for example, electric drills, electric grinders, electric wrenches, electric screwdrivers, electric hammers, impact electric drills, concrete vibrators, and electric planers. It should be understood that in various possible embodiments conforming to the design concept of the present utility model, the cylindrical battery or the battery device provided in the present utility model is not limited only to be adapted to the equipment described above, and may also be applicable to all equipment using the batteries. For simplicity of description, various embodiments in this specification are described by taking the vehicle as an example.

The "parallel" mentioned in the present application not only may be completely parallel, but also may have a certain error; for example, the included angle between the two is greater than or equal to 0° and less than or equal to 5°, that is, the two are considered to be parallel to each other.

After considering the specification and practicing the contents disclosed herein, those skilled in the art will readily think of other examples of the present disclosure. The present application is intended to cover any variation, use or adaptation of the present disclosure, and these variations, uses or adaptations follow the general principle of the present disclosure and include common knowledge or customary technical means in the technical field not disclosed in the present disclosure. The specification and the examples are deemed to be illustrative only, and the true scope and spirit of the present disclosure are indicated by the claims.

The accompanying drawings in the present disclosure only relate to the structures to which the present disclosure relates, and other structures may refer to conventional designs. Without conflict, the examples of the present disclosure and the features in the examples may be combined with each other to obtain new examples. It will be understood by those ordinarily skilled in the art that modifications or equivalent replacements may be made to the technical solutions of the present disclosure without departing from the spirit and scope of the technical solutions of the present disclosure, and all should be included in the scope of the claims of the present disclosure.

It should be understood that the present disclosure is not limited to the precise structures already described above and shown in the accompanying drawings, and various modifications and changes may be made without departing from the scope thereof. The scope of the present disclosure is defined only by the attached claims.

## Claims

1. A heat exchange plate, **characterized by** comprising:
a first side plate (1) being of an aluminum structure or an aluminum alloy structure;
a second side plate (2), a large face of the second side plate (2) being arranged opposite to a large face of the first side plate (1), and a groove (3) for forming a heat exchange channel (7) being formed in one side of the second side plate (2) facing the first side plate (1);
wherein the second side plate (2) comprises a main body layer (21) and a protective layer (22), the protective layer (22) is located between the main body layer (21) and the first side plate (1), the main body layer (21) is of a steel structure, and the protective layer (22) is of an aluminum structure or an aluminum alloy structure; **characterized by**
a thickness of the second side plate (2) located in an area outside the groove (3) is g mm, a depth of the groove (3) is d mm, and a thickness of the protective layer (22) located in the area outside the groove (3) is x mm, x×0.01×(1-(4.55d-5.36)) > λ×g; and
wherein λ is equal to 10%.

2. The heat exchange plate according to claim 1, **characterized in that** x×0.01×(1-(4.55d-5.36)) < g-0.45.

3. The heat exchange plate according to claim 1, **characterized in that** x is 0.125 to 1.2.

4. The heat exchange plate according to claim 1, **characterized in that** g is 0.7 to 1.2.

5. The heat exchange plate according to claim 1, **characterized in that** x/g is 0.1 to 1.72.

6. The heat exchange plate according to claim 1, **characterized in that** a side face of the groove (3) comprises a circular arc area (311), the second side plate (2) comprises a straight portion (25) located outside the groove (3), a central axis of the circular arc area (311) is parallel to the straight portion (25), and a central angle of the circular arc area (311) is 105° to 120°.

7. The heat exchange plate according to claim 1, **characterized in that** a side face of the groove (3) comprises a circular arc area (311), the second side plate (2) comprises a straight portion (25) located outside the groove (3), a central axis of the circular arc area (311) is parallel to the straight portion (25), and a radius of curvature of the circular arc area (311) is greater than or equal to 2 mm.

8. The heat exchange plate according to claim 1, **characterized in that** d/g is 1.6 to 6.7.

9. The heat exchange plate according to any one of claims 1 to 8, **characterized by** further comprising:
a welding layer (4) welded between the first side plate (1) and the second side plate (2), wherein a melting point of the welding layer (4) is lower than a melting point of the protective layer (22), and/or the melting point of the welding layer (4) is lower than a melting point of the first side plate (1).

10. The heat exchange plate according to claim 9, **characterized in that** a material of the welding layer (4) is 4-series aluminum.

11. The heat exchange plate according to any one of claims 1 to 8, **characterized in that** a material of the protective layer (22) is 1-series aluminum; and/or
a material of the first side plate (1) is 3-series aluminum.

12. The heat exchange plate according to any one of claims 1 to 8, **characterized in that** the first side plate (1) is of a flat plate structure, a thickness of the first side plate (1) is a mm, a thickness of the main body layer (21) located in the area outside the groove (3) is b mm, and a/b is 0.1 to 9.

13. A battery device, **characterized by** comprising the heat exchange plate according to any one of claims 1 to 12.

14. The battery device according to claim 13, **characterized by** further comprising a battery (5), wherein the battery (5) is located on one side of the first side plate (1) away from the second side plate (2).

15. The battery device according to claim 14, **characterized in that** the thickness of the first side plate (1) is 1 mm to 3 mm.

## Patentansprüche

1. Wärmetauschplatte, **gekennzeichnet dadurch, dass** sie umfasst:
eine erste Seitenplatte (1), die aus einer Aluminiumstruktur oder einer Aluminiumlegierungsstruktur gebildet ist;
eine zweite Seitenplatte (2), wobei eine große Fläche der zweiten Seitenplatte (2) einer großen Fläche der ersten Seitenplatte (1) gegenüberliegt, und wobei eine Nut (3) zur Bildung eines Wärmeaustauschkanals (7) auf einer der ersten Seitenplatte (1) zugewandten Seite der zweiten Seitenplatte (2) ausgebildet ist;
wobei die zweite Seitenplatte (2) eine Hauptkörperschicht (21) und eine Schutzschicht (22) umfasst, wobei die Schutzschicht (22) zwischen der Hauptkörperschicht (21) und der ersten Seitenplatte (1) angeordnet ist, wobei die Hauptkörperschicht (21) aus einer Stahlstruktur gebildet ist und die Schutzschicht (22) aus einer Aluminiumstruktur oder einer Aluminiumlegierungsstruktur gebildet ist; **gekennzeichnet dadurch, dass**
eine Dicke der zweiten Seitenplatte (2), die sich in einem Bereich außerhalb der Nut (3) befindet, g mm beträgt, eine Tiefe der Nut (3) d mm beträgt und eine Dicke der Schutzschicht (22), die sich in dem Bereich außerhalb der Nut (3) befindet, x mm beträgt, wobei x × 0,01 × (1 - (4,55d - 5,36)) > λ × g ist; und
wobei λ gleich 10 % ist.

2. Wärmeaustauschplatte nach Anspruch 1, **dadurch gekennzeichnet, dass** x × 0,01 × (1 - (4,55d - 5,36)) < g - 0,45 ist.

3. Wärmeaustauschplatte nach Anspruch 1, **dadurch gekennzeichnet, dass** x 0,125 bis 1,2 beträgt.

4. Wärmeaustauschplatte nach Anspruch 1, **dadurch gekennzeichnet, dass** g 0,7 bis 1,2 beträgt.

5. Wärmeaustauschplatte nach Anspruch 1, **dadurch gekennzeichnet, dass** x/g 0,1 bis 1,72 beträgt.

6. Wärmeaustauschplatte nach Anspruch 1, **dadurch gekennzeichnet, dass** eine Seitenfläche der Nut (3) einen Kreisbogenbereich (311) umfasst, die zweite Seitenplatte (2) einen geraden Abschnitt (25) umfasst, der außerhalb der Nut (3) angeordnet ist, eine Mittelachse des Kreisbogenbereichs (311) parallel zu dem geraden Abschnitt (25) verläuft und ein Zentralwinkel des Kreisbogenbereichs (311) 105° bis 120° beträgt.

7. Wärmeaustauschplatte nach Anspruch 1, **dadurch gekennzeichnet, dass** eine Seitenfläche der Nut (3) einen Kreisbogenbereich (311) umfasst, die zweite Seitenplatte (2) einen geraden Abschnitt (25) umfasst, der außerhalb der Nut (3) angeordnet ist, eine Mittelachse des Kreisbogenbereichs (311) parallel zu dem geraden Abschnitt (25) verläuft und ein Krümmungsradius des Kreisbogenbereichs (311) größer oder gleich 2 mm ist.

8. Wärmeaustauschplatte nach Anspruch 1, **dadurch gekennzeichnet, dass** d/g 1,6 bis 6,7 beträgt.

9. Wärmeaustauschplatte nach einem der Ansprüche 1 bis 8, **dadurch gekennzeichnet, dass** sie ferner umfasst:
eine Schweißschicht (4), die zwischen der ersten Seitenplatte (1) und der zweiten Seitenplatte (2) verschweißt ist, wobei ein Schmelzpunkt der Schweißschicht (4) niedriger als ein Schmelzpunkt der Schutzschicht (22) ist und / oder der Schmelzpunkt der Schweißschicht (4) niedriger als ein Schmelzpunkt der ersten Seitenplatte (1) ist.

10. Wärmeaustauschplatte nach Anspruch 9, **dadurch gekennzeichnet, dass** ein Material der Schweißschicht (4) Aluminium der 4er-Serie ist.

11. Wärmeaustauschplatte nach einem der Ansprüche 1 bis 8, **dadurch gekennzeichnet, dass** ein Material der Schutzschicht (22) Aluminium der 1er-Serie ist; und / oder
ein Material der ersten Seitenplatte (1) Aluminium der 3er-Serie ist.

12. Wärmeaustauschplatte nach einem der Ansprüche 1 bis 8, **dadurch gekennzeichnet, dass** die erste Seitenplatte (1) eine flache Plattenstruktur aufweist, eine Dicke der ersten Seitenplatte (1) a mm beträgt, eine Dicke der Hauptkörperschicht (21), die sich in dem Bereich außerhalb der Nut (3) befindet, b mm beträgt und a/b 0,1 bis 9 beträgt.

13. Batterievorrichtung, **dadurch gekennzeichnet, dass** sie die Wärmeaustauschplatte nach einem der Ansprüche 1 bis 12 umfasst.

14. Batterievorrichtung nach Anspruch 13, **dadurch gekennzeichnet, dass** sie ferner eine Batterie (5) umfasst, wobei die Batterie (5) auf einer Seite der ersten Seitenplatte (1) angeordnet ist, die von der zweiten Seitenplatte (2) entfernt ist.

15. Batterievorrichtung nach Anspruch 14, **dadurch gekennzeichnet, dass** die Dicke der ersten Seitenplatte (1) 1 mm bis 3 mm beträgt.

## Revendications

1. Plaque d'échange thermique, **caractérisée en ce qu'**elle comprend :
une première plaque latérale (1) constituée d'une structure en aluminium ou d'une structure en alliage d'aluminium ;
une deuxième plaque latérale (2), une grande face de la deuxième plaque latérale (2) étant disposée en face d'une grande face de la première plaque latérale (1), et une rainure (3) destinée à former un canal d'échange thermique (7) étant formée dans un côté de la deuxième plaque latérale (2) faisant face à la première plaque latérale (1) ;
dans laquelle la deuxième plaque latérale (2) comprend une couche de corps principal (21) et une couche de protection (22), la couche de protection (22) est située entre la couche de corps principal (21) et la première plaque latérale (1), la couche de corps principal (21) est constituée d'une structure en acier, et la couche de protection (22) est constituée d'une structure en aluminium ou d'une structure en alliage d'aluminium ; **caractérisée en ce que** l'épaisseur de la deuxième plaque latérale (2) située dans une zone à l'extérieur de la rainure (3) est de g mm, la profondeur de la rainure (3) est de d mm, et l'épaisseur la couche de protection (22) située dans la zone à l'extérieur de la rainure (3) est de x mm, x × 0,01 × (1 - (4,55d - 5,36)) > λ × g ; et où λ est égal à 10 %.

2. Plaque d'échange thermique selon la revendication 1, **caractérisée en ce que** x × 0,01 × (1 - (4,55d - 5,36)) < g - 0,45.

3. Plaque d'échange thermique selon la revendication 1, **caractérisée en ce que** x est compris entre 0,125 et 1,2.

4. Plaque d'échange thermique selon la revendication 1, **caractérisée en ce que** g est compris entre 0,7 et 1,2.

5. Plaque d'échange thermique selon la revendication 1, **caractérisée en ce que** x/g est compris entre 0,1 et 1,72.

6. Plaque d'échange thermique selon la revendication 1, **caractérisée en ce qu'**une face latérale de la rainure (3) comprend une zone en arc de cercle (311), la deuxième plaque latérale (2) comprend une partie droite (25) située à l'extérieur de la rainure (3), un axe central de la zone en arc de cercle (311) est parallèle à la partie droite (25), et un angle central de la zone en arc de cercle (311) est compris entre 105° et 120°.

7. Plaque d'échange thermique selon la revendication 1, **caractérisée en ce qu'**une face latérale de la rainure (3) comprend une zone en arc de cercle (311), la deuxième plaque latérale (2) comprend une partie droite (25) située à l'extérieur de la rainure (3), l'axe central de la zone en arc de cercle (311) est parallèle à la partie droite (25), et le rayon de courbure de la zone en arc de cercle (311) est supérieur ou égal à 2 mm.

8. Plaque d'échange thermique selon la revendication 1, **caractérisée en ce que** d/g est compris entre 1,6 et 6,7.

9. Plaque d'échange thermique selon l'une quelconque des revendications 1 à 8, **caractérisée en ce qu'**elle comprend en outre :
une couche de soudure (4) soudée entre la première plaque latérale (1) et la deuxième plaque latérale (2), dans laquelle le point de fusion de la couche de soudure (4) est inférieur au point de fusion de la couche de protection (22), et/ou le point de fusion de la couche de soudure (4) est inférieur au point de fusion de la première plaque latérale (1).

10. Plaque d'échange thermique selon la revendication 9, **caractérisée en ce que** le matériau de la couche de soudure (4) est de l'aluminium de la série 4.

11. Plaque d'échange thermique selon l'une quelconque des revendications 1 à 8, **caractérisée en ce que** le matériau de la couche de protection (22) est de l'aluminium de la série 1 ; et/ou le matériau de la première plaque latérale (1) est de l'aluminium de la série 3.

12. Plaque d'échange thermique selon l'une quelconque des revendications 1 à 8, **caractérisée en ce que** la première plaque latérale (1) présente une structure de plaque plate, l'épaisseur de la première plaque latérale (1) est de a mm, l'épaisseur de la couche de corps principal (21) située dans la zone à l'extérieur de la rainure (3) est de b mm, et a/b est compris entre 0,1 et 9.

13. Dispositif de batterie, **caractérisé en ce qu'**il comprend la plaque d'échange thermique selon l'une quelconque des revendications 1 à 12.

14. Dispositif de batterie selon la revendication 13, **caractérisé en ce qu'**il comprend en outre une batterie (5), dans lequel la batterie (5) est située sur un côté de la première plaque latérale (1) éloigné de la deuxième plaque latérale (2).

15. Dispositif de batterie selon la revendication 14, **caractérisé en ce que** l'épaisseur de la première plaque latérale (1) est comprise entre 1 mm et 3 mm.
